# EUROPEAN PATENT SPECIFICATION

(11) **EP 4 074 491 B1**
(45) Date of publication and mention of the grant of the patent: **20.12.2023**
(21) Application number: 22167811.3
(22) Date of filing: 12.04.2022
(51) Int. Cl.: B29C 65/02, B29C 65/08, B29C 65/74, B29C 65/82, B65B 9/20, B65B 29/00, B65B 51/22, B65B 51/30, B65B 57/00, B65B 61/06, B65B 57/18

(54) **MACHINE FOR MANUFACTURING POUCHES OF COHESIONLESS MATERIAL AND METHOD THEREOF**
MASCHINE ZUR HERSTELLUNG VON BEUTELN FÜR KOHÄSIONSLOSES MATERIAL UND VERFAHREN DAZU
MACHINE POUR LA FABRICATION DE SACHETS DE MATIÈRE SANS COHÉSION ET MÉTHODE ASSOCIÉE

(30) Priority: 14.04.2021 IT 202100009302
(43) Date of publication of application: 19.10.2022
(73) Proprietor: Sasib S.p.A., 40013 Castel Maggiore (BO) (IT)
(72) Inventor: ROBERTO, GHIOTTI, 40013 Castel Maggiore (BO) (IT); DEGLI ESPOSTI, ROBERTO, 40013 Castel Maggiore (BO) (IT)
(74) Representative: Bianciardi, Ezio

(56) References cited:
- WO-A1-2008/114133
- FR-A1- 2 744 422

## Description

This invention relates to a machine and a related method for manufacturing pouches of cohesionless material. In particular, this invention relates to a machine and a related method for manufacturing pouches containing smokeless tobacco and/or nicotine (commonly known by the name of "*snus*").

This specification hereinafter refers expressly to tobacco, without thereby losing in generality, since the cohesionless material may consist of other materials such as, for example, powder materials treated with moist substances or pharmaceuticals or confectionery products.

As is known, pouches of tobacco are substantially rectangular pouches extending longitudinally. Each pouch contains a dose of tobacco and comprises a longitudinal weld and a pair of transversal welds.

A prior art machine for manufacturing pouches of tobacco of this kind is known, for example, from document WO2008/114133 and comprises: conveying means for conveying a band of wrapping material along a packaging path; a wrapping station arranged along the packaging path where the band of wrapping material is wound to form a tubular element; first welding means for longitudinally welding the tubular element formed from the band of wrapping material; feeding means of the cohesionless material for feeding doses of cohesionless material inside the tubular element; second welding means for transversely welding the tubular element so as to form a continuous and alternating succession of welding zones and zones containing a dose of cohesionless material; cutting means for transversely cutting the continuous succession at the welding zones so as to form pouches of cohesionless material, each containing a dose of cohesionless material and having a first transversal weld and a second transversal weld.

In order to ensure that they are of good quality, the longitudinal weld of the tobacco pouches are inspected using a camera. The pouches may also be inspected to check the quality of the transversal welds. In other words, a camera is used to check that the welds extend across the full width of each pouch to ensure that no cohesionless material can escape from the pouch.

To further increase the quality of the tobacco pouches made, it is necessary to ensure that all the pouches that reach consumers have transversal welds of a certain length. In other words, in order to ensure that the tobacco pouches do not break during use, the length of the transversal seals must be checked to make sure it is greater than or equal to a predetermined length.

The prior art machine is not, however, capable of performing this check and cannot therefore, provide the assurance that the transversal seals of all the tobacco pouches have the required length.

Document FR2744422 discloses a method for checking the quality of welded seams on product packages using light sources and optical systems designed to detect imperfections in the welds in the form of opaque spots. This purely qualitative form of detection does not, however, provide any information on other properties of the welds, in particular, the geometrical properties.

This invention therefore has for an aim to provide a machine for manufacturing pouches of cohesionless material guaranteed to meet high quality standards.

This aim is achieved by a machine and a method for manufacturing pouches of cohesionless material as set out in the appended claims.

Advantageously, the machine of this invention allows detecting, with specific sensor means, the length of one or both of the transversal welds and comparing the data detected by the sensor means with a predetermined length value.

The invention is described below with reference to the accompanying drawings, which illustrate a non-limiting embodiment of it and in which:
- Figure 1 schematically illustrates a pouch of cohesionless material from above;
- Figure 2 is a side view of the pouch of cohesionless material of Figure 1;
- Figure 3 is a schematic side view of an embodiment of the machine of this invention;
- Figure 4 is a top view of a part of the packaging path of a second embodiment of the machine of this invention.

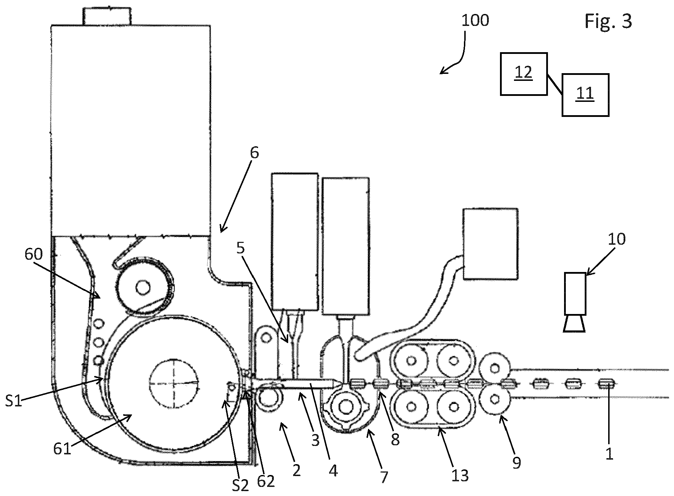

With reference to Figure 3, the reference numeral 100 denotes a machine according to this invention for manufacturing pouches of cohesionless material, in particular intended for oral use.

The term "cohesionless material" is used to mean any non-compact material. Preferably, the cohesionless material is a material of the tobacco industry such as, for example, loose material or a loose material comprising nicotine. Alternatively, the cohesionless material might be a material of the pharmaceutical industry or a material of the confectionery industry.

In particular, the machine 100 of this invention is a machine for manufacturing pouches 1 of the tobacco industry (commonly called "*snus*").

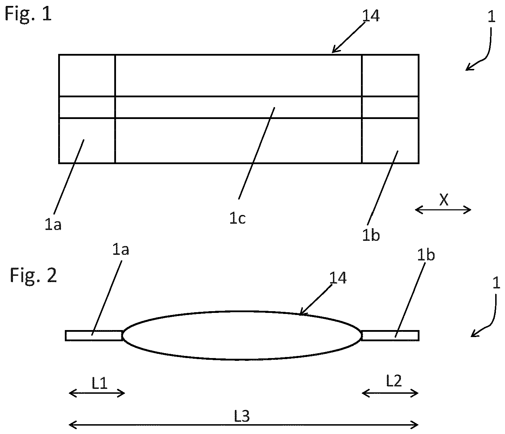

Described herein with reference to Figures 1 and 2 is a pouch 1 of cohesionless material made by the machine 100 of this invention.

A pouch 1 is substantially rectangular in shape with a longitudinal direction of extension X.

The pouch 1 comprises a wrapper 14 containing a dose of cohesionless material (not illustrated). The wrapper 14 is made from a material of the non-woven fabric type. The dose of cohesionless material is enclosed in the wrapper 14 by three welds: a longitudinal weld 1c running parallel to a top face of the pouch 1 and two transversal welds 1a, 1b running transversely (perpendicularly) to the longitudinal direction of extension of the pouch 1.

The first transversal weld 1a has a length L1 (measured parallel to the direction of extension of the pouch 1). The second transversal weld 1b has a length L2 (measured parallel to the direction of extension of the pouch 1). Preferably, the length L1 of the first weld 1a is equal to the length L2 of the second weld 1b.

The longitudinal weld 1c has a length L3 (measured parallel to the direction of extension of the pouch 1), equal to the length of the pouch 1.

With reference to Figure 2, the first weld 1a and the second weld 1b define two substantially flat ends of the pouch 1.

Described below with reference to Figure 3 is a first embodiment of the machine 100 of this invention.

The machine 100 comprises: conveying means 2 for conveying a band of wrapping material along a packaging path; a wrapping station 3 arranged along the packaging path, where the band of wrapping material is wound to form a tubular element 4; first welding means 5 for longitudinally welding the tubular element 4 formed from the band of wrapping material; feeding means 6 of the cohesionless material for feeding doses of cohesionless material inside the tubular element 4; second welding means 7 for transversely welding the tubular element 4 so as to form a continuous and alternating succession 8 of welding zones 8a and zones 8b containing a dose of cohesionless material; cutting means 9 for transversely cutting the continuous succession 8 at the welding zones 8a so as to form pouches 1 of cohesionless material each containing a dose of cohesionless material and having a first transversal weld 1a and a second transversal weld 1b.

The band of wrapping material is preferably unwound from a roll, not illustrated.

The wrapping station 3 comprises a tubular forming mandrel around which the band of wrapping material is wound to form the tubular element 4. The band of wrapping material is progressively wound around the mandrel by suitable folders.

The tubular element 4 has a longitudinal axis of extension. The longitudinal axis of extension is substantially parallel to the packaging path.

Positioned at the mandrel (or, if necessary, downstream of it) there are first welding means 5 (preferably ultrasound) to weld the tubular element 4 longitudinally. In other words, the first welding means 5 make a weld along the axis of extension of the tubular element 4 (that is, a weld substantially parallel to the packaging path).

Preferably, the feeding means 6 of the cohesionless material comprise: a hopper 60 for containing the cohesionless material; a rotary conveyor 61 that is movable between a loading station S1, where it receives the cohesionless material from the hopper 60, and a transfer station S2, where it transfers the cohesionless material; a duct 62, having one end at the transfer station S2 and the other end at the wrapping station 3.

The rotary conveyor 61 is a drum that rotates intermittently about a horizontal axis and comprises a suction source at the loading station S1 and a compressed air source at the transfer station S2. In use, as the rotary conveyor 61 rotates, a continuous stream of cohesionless material is formed (by the effect of the suction source) on the mantle of the rotary conveyor.

The continuous stream of cohesionless material is conveyed to the transfer station S2 where, by the effect of the compressed air source, doses of cohesionless material are separated from the continuous stream and are transferred along the duct 62 until they reach the inside of the mandrel and are deposited on the band of wrapping material that has been formed into the tubular element 4.

Preferably, one or more compressed air sources may be provided along the duct 62 to facilitate transfer of the dose of cohesionless material along the mandrel.

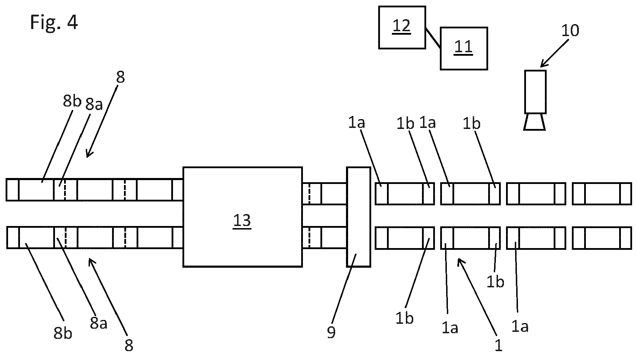

The second welding means 7 operate intermittently in synchrony with the feeding of the doses of cohesionless material. The second welding means 7 weld the tubular element 4 so as to form a continuous and alternating succession 8 of welding zones 8a and zones 8b containing a dose of cohesionless material (visible more clearly in Figure 4).

In other words, the action of the second welding means 7 results in the formation of a continuous succession 8 of pouches 1 of cohesionless material.

Downstream of the second welding means 7, individual pouches 1 of cohesionless material are separated from the continuous succession 8 of pouches 1 by the cutting means 9.

Downstream of the second welding means 7, the machine 100 comprises entrainment means 13 for entraining the continuous succession 8 towards the cutting means. With reference to the machine 100 illustrated in Figure 3, the entrainment means 13 comprise a pair of opposing conveyor belts looped around respective pulleys. Alternatively, the entrainment means 13 may comprise a pair of feed belts, each looped around three pulleys.

Preferably, downstream of the second welding means 7 and upstream of the cutting means 9, the machine 100 comprises at least one sensor (not illustrated), for example, an optical sensor (camera). The purpose of this sensor is to detect, at the continuous succession 8 (that is, prior to cutting) one or more of the following features: the presence of a dose of cohesionless material at each zone 8b; and/or the quality (for example, the uniformity and/or the evenness of the edges and/or that the width of the transversal weld is equal to the width of the pouch 1) of the transversal welds made by the second welding means 7; and/or the presence of cohesionless material at the welding zones 8a (such material might impair the strength of the transversal seals).

This at least one sensor is connected to a control unit 11 to receive the data detected by it and to compare them with a range of predetermined values. Further, if the data are outside the range of predetermined values, the pouches 1 are rejected in the same way as described below with reference to the sensor means 10.

What is stated above may be extended to a twin-line machine, a part of which is schematically illustrated in Figure 4.

In this case, the feeding means 6 are structured in such a way as to feed two doses of cohesionless material to respective tubular elements 4 simultaneously.

It is evident in particular from Figure 4, that each welding zone 8a of the continuous succession 8 of pouches 1 comprises the first weld 1a of a pouch 1 upstream (relative to the packaging path) and a second weld 1b of a pouch 1 downstream.

Thus, the length of a welding zone 8a is equal to the sum of the lengths of the first weld 1a of a pouch 1 upstream and of the second weld 1b of a pouch 1 downstream.

In Figure 4, the dashed line indicates the ideal cutting position of the continuous and alternating succession 8 of welding zones 8a and zones 8b containing a dose of cohesionless material.

By ideal cutting position of the cut is meant the cutting position such that the length L1 of the first weld 1a is equal to the length L2 of the second weld 1b and both welds 1a, 1b have a length L1, L2 that is greater than a minimum value (to ensure a certain quality standard).

According to this invention, the machine 100 comprises sensor means 10 arranged downstream of the cutting means 9 to detect the length L1 of the first weld 1a and/or the length L2 of the second weld 1b of the pouches 1 of cohesionless material (in particular of all the pouches 1).

The machine 100 also comprises a control unit 11 which is connected to the sensor means 10 to receive the data detected by the sensor means 10 and to compare them with a range of predetermined length values of the first weld 1a and/or of the second weld 1b.

In other words, for each pouch 1, the sensor means 10 detect the length L1 of the first weld 1a and/or the length L2 of the second weld 1b and the control unit 11 compares the length value L1, L2 with a range of predetermined length values.

In other words, if the predetermined length value for the first weld 1a and the second weld 1b is 3 mm, plus or minus 1 mm, the range of predetermined length values is from 2 mm to 4 mm.

Thus, the control unit 11 checks that the length L1 of the first weld 1a and/or the length L2 of the second weld 1b detected by the sensor means 10 falls within the 2 mm to 4 mm range.

Alternatively, if the predetermined length value for the first weld 1a and the second weld 1b is 3 mm, plus or minus zero mm, the range of predetermined length values is 3 mm.

In such a case, the control unit 11 checks that the length L1 of the first weld 1a and/or the length L2 of the second weld 1b is exactly 3 mm.

Preferably, the control unit 11 is connected to the cutting means 9 to command the cutting means 9 so that the cut is performed in the middle of each welding zone 8a of the continuous succession 8. In other words, the control unit 11 commands the cutting means 9 in relation to the feed speed of the continuous succession 8 of pouches 1 of cohesionless material: the control unit 11 commands the cutting means 9 in such a way as to ensure that their action is performed in the middle of each welding zone 8a.

In other words, the cutting means 9 are commanded according to feedback from the control unit 11 based on the data detected by the sensor means 10. Thus, the cutting means 9 are commanded by the control unit 11 in such a way as to obtain pouches 1 of cohesionless material having a length L1 of the first weld 1a and/or a length L2 of the second weld 1b within the range of predetermined length values.

Advantageously, the machine 100 makes pouches 1 of high quality and reduces the number of pouches 1 to be rejected.

Preferably, the sensor means 10 comprise a camera (in particular, a high resolution camera). In the case of a twin-line machine 100 (as in Figure 4), the sensor means 10 may comprise either a single camera for both lines or at least one camera for each production line.

In a preferred embodiment, the machine 100 comprises reject means (not illustrated) arranged downstream of the sensor means 10, for rejecting a pouch 1 of cohesionless material.

The control unit 11 commands the reject means on the basis of the data received from the sensor means 10 so as to reject a pouch 1 of cohesionless material if the length L1 of the first weld 1a and/or the length L2 of the second weld 1b is not contained in the range of predetermined length values of the first weld 1a and/or of the second weld 1b.

The reject means may comprise a pusher and/or a compressed air source. In a preferred embodiment, the machine 100 comprises alarm means 12 to signal an irregularity in the production of the pouches 1 of cohesionless material.

The control unit 11 commands the alarm means 12 on the basis of the data received from the sensor means 10 so as to signal if at least one pouch 1 of cohesionless material has a length L1 of the first weld 1a and/or a length L2 of the second weld 1b not contained in the range of predetermined length values of the first weld 1a and/or of the second weld 1b.

The alarm means 12 may be acoustic and/or visual alarm means. Alternatively, the alarm means 12 may be such as to cause the machine 100 to be brought to a stop.

Another object of this invention is a system (not illustrated) for the production and packaging of pouches 1 of cohesionless material. The system comprises a first machine 100 for manufacturing pouches 1 of cohesionless material according to one of the embodiments described above and a second machine for packaging pouches 1 of cohesionless material.

The second machine (not illustrated) is located downstream of the first machine 100 and comprises: feeding means for feeding a plurality of packages (for example, tins or bags) intended to contain the pouches 1 of cohesionless material; a delivery station in which a plurality of pouches 1 of cohesionless material is placed inside a package.

Preferably, the second machine comprises reject means arranged downstream of the delivery station for rejecting a package containing a plurality of pouches 1 of cohesionless material. In this embodiment, the control unit 11 of the first machine 100 controls the reject means of the second machine (directly or indirectly) on the basis of the data received from the sensor means 10 so as to reject a package containing a pouch 1 of cohesionless material having a length L1 of the first weld 1a and/or a length L2 of the second weld 1b not contained in the range of predetermined length values of the first weld 1a and/or of the second weld 1b.

This embodiment is particularly advantageous where the first machine 100 does not comprise reject means.

Another object of this invention is a method for manufacturing pouches 1 of cohesionless material. The method comprises the following steps: conveying a band of wrapping material along a packaging path; wrapping the band of wrapping material in order to form a tubular element 4; longitudinally welding the tubular element 4 formed from the band of wrapping material; feeding doses of cohesionless material inside the tubular element 4; transversely welding the tubular element 4 so as to form a continuous and alternating succession 8 of welding zones 8a and zones 8b containing a dose of cohesionless material; cutting the continuous succession 8 transversely at the welding zones 8a so as to form pouches 1 of cohesionless material each containing a dose of cohesionless material and having a first transversal weld 1a and a second transversal weld 1b.

Advantageously, the method comprises the following steps: detecting the length L1 of the first weld 1a and/or the length L2 of the second weld 1b of the pouch 1 of cohesionless material; comparing the detected length of the first weld 1a and/or the second weld 1b with a range of predetermined length values of the first weld 1a and/or of the second weld 1b.

Preferably, the step of cutting the continuous succession 8 transversely at the welding zones 8a is performed in order to cut each welding zone 8a of the continuous succession 8 in the middle. Advantageously, the pouches 1 of cohesionless material obtained are such that the length L1 of the first weld 1a is equal to the length L2 of the second weld 1b.

In an embodiment, the method comprises the step of rejecting a pouch 1 of cohesionless material if the length L1 of the first weld 1a and/or the length L2 of the second weld 1b is not contained in the range of predetermined length values of the first weld 1a and/or of the second weld 1b.

The method may also comprise the step of signalling if at least one pouch 1 of cohesionless material has a length L1 of the first weld 1a and/or a length L2 of the second weld 1b not contained in the range of predetermined length values of the first weld 1a and/or of the second weld 1b.

The step of signalling may comprise the step of emitting an acoustic and/or an optical (visual) signal. Alternatively, the step of signalling may comprise stopping the machine 100.

The machine 100 and the method for manufacturing pouches 1 of cohesionless material are capable of ensuring that the pouches 1 are of high quality. Advantageously, with the sensor means 10 located downstream of the cutting means 9, the machine 100 of this invention allows detecting the length L1, L2 of one or both of the transversal welds 1a, 1b and comparing the data detected by the sensor means 10 with a predetermined length value.

## Claims

1. A machine (100) for manufacturing pouches (1) of cohesionless material, in particular of the tobacco industry, comprising:
conveying means (2) for conveying a band of wrapping material along a packaging path;
a wrapping station (3) arranged along the packaging path wherein the band of wrapping material is wound to form a tubular element (4);
first welding means (5) for longitudinally welding the tubular element (4) formed from the band of wrapping material;
feeding means (6) of the cohesionless material for feeding doses of cohesionless material inside the tubular element (4);
second welding means (7) for transversely welding the tubular element (4) so as to form a continuous and alternating succession (8) of welding zones (8a) and zones (8b) containing a dose of cohesionless material;
cutting means (9) for transversely cutting the continuous succession (8) at the welding zones (8a) so as to form pouches (1) of cohesionless material each containing a dose of cohesionless material and having a first transversal weld (1a) and a second transversal weld (1b);
the machine (100) being **characterized in that** it comprises:
sensor means (10) arranged downstream of the cutting means (9) to detect the length (L1) of the first weld (1a) and/or the length (L2) of the second weld (1b) of the pouches (1) of cohesionless material;
a control unit (11) which is connected to the sensor means (10) to receive the data detected by the sensor means (10) and compare them with a range of predetermined length values of the first weld (1a) and/or of the second weld (1b).

2. The machine (100) according to claim 1, wherein the control unit (11) is connected to the cutting means (9) to command the cutting means (9) so that the cut is performed in the middle of each welding zone (8a) of the continuous succession (8).

3. The machine (100) according to claim 1 or 2, wherein the sensor means (10) comprise a camera.

4. The machine (100) according to any one of the preceding claims from 1 to 3, comprising reject means arranged downstream of the sensor means (10) for rejecting a pouch (1) of cohesionless material; and wherein the control unit (11) commands the reject means on the basis of the data received from the sensor means (10) so as to reject a pouch (1) of cohesionless material if the length (L1) of the first weld (1a) and/or the length (L2) of the second weld (1b) is not contained in the range of predetermined length values of the first weld (1a) and/or of the second weld (1b).

5. The machine (100) according to any one of the preceding claims from 1 to 4, comprising alarm means (12) to signal an irregularity in the production of pouches (1) of cohesionless material; and wherein the control unit (11) commands the alarm means (12) on the basis of the data received from the sensor means (10) so as to signal if at least one pouch (1) of cohesionless material has a length (L1) of the first weld (1a) and/or a length (L2) of the second weld (1b) not contained in the range of predetermined length values of the first weld (1a) and/or of the second weld (1b).

6. The machine (100) according to any one of the preceding claims from 1 to 5, comprising at least one sensor, preferably of the optical type, arranged between the second welding means (7) and the cutting means (9) to detect: the presence of a dose of cohesionless material at each zone (8b) containing a dose of cohesionless material; and/or the quality of the welding performed by the second welding means (7); and/or the presence of cohesionless material at the welding zones (8a).

7. A system for the production and packaging of pouches (1) of cohesionless material, comprising:
a first machine (100) for manufacturing pouches (1) of cohesionless material according to any one of claims 1 to 6;
a second machine for packaging pouches (1) of cohesionless material, the second machine being arranged downstream of the first machine (100) and comprising: feeding means for feeding a plurality of package intended to contain the pouches (1) of cohesionless material; a delivery station in which a plurality of pouches (1) of cohesionless material is placed inside a package.

8. The system according to claim 7, wherein: the second machine comprises reject means arranged downstream of the delivery station for rejecting a package containing a plurality of pouches (1) of cohesionless material; and the control unit (11) of the first machine (100) controls the reject means of the second machine on the basis of the data received from the sensor means (10) so as to reject a package containing a pouch (1) of cohesionless material having a length (L1) of the first weld (1a) and/or a length (L2) of the second weld (1b) not contained in the range of predetermined length values of the first weld (1a) and/or of the second weld (1b).

9. A method for manufacturing pouches (1) of cohesionless material, in particular of the tobacco industry, comprising the steps of:
conveying a band of wrapping material along a packaging path;
wrapping the band of wrapping material in order to form a tubular element (4);
longitudinally welding the tubular element (4) formed from the band of wrapping material;
feeding doses of cohesionless material inside the tubular element (4);
transversely welding the tubular element (4) so as to form a continuous and alternating succession (8) of welding zones (8a) and zones (8b) containing a dose of cohesionless material;
cutting the continuous succession (8) transversely at the welding zones (8a) so as to form pouches (1) of cohesionless material each containing a dose of cohesionless material and having a first transversal weld (1a) and a second transversal weld (1b);
the method being **characterized in that** it comprises the steps of:
detecting the length (L1) of the first weld (1a) and/or the length (L2) of the second weld (1b) of the pouch (1) of cohesionless material;
comparing the detected length of the first weld (1a) and/or the second weld (1b) with a range of predetermined length values of the first weld (1a) and/or of the second weld (1b).

10. The method according to claim 9, wherein the step of cutting the continuous succession (8) transversely at the welding zones (8a) is performed in order to cut each welding zone (8a) of the continuous succession (8) in the middle.

11. The method according to claim 9 or 10, further comprising the step of rejecting a pouch (1) of cohesionless material if the length (L1) of the first weld (1a) and/or the length (L2) of the second weld (1b) is not contained in the range of predetermined length values of the first weld (1a) and/or of the second weld (1b).

12. The method according to any one of the claims from 9 to 11, comprising the step of signalling if at least one pouch (1) of cohesionless material has a length (L1) of the first weld (1a) and/or a length (L2) of the second weld (1b) not contained in the range of predetermined length values of the first weld (1a) and/or of the second weld (1b).

## Patentansprüche

1. Maschine (100) zur Herstellung von Beuteln (1) für kohäsionsloses Material, insbesondere für die Tabakindustrie, umfassend:
Fördermittel (2) zum Fördern eines Bands aus Einwickelmaterial entlang eines Verpackungswegs;
eine Einwickelstation (3), die entlang des Verpackungswegs angeordnet ist, wobei das Band aus Einwickelmaterial gewunden ist, um ein rohrförmiges Element (4) zu formen;
erste Schweißmittel (5) zum Längsschweißen des aus dem Band aus Einwickelmaterial geformten rohrförmigen Elements (4);
Fördermittel (6) für das kohäsionslose Material zum Zuführen von Dosierungen von kohäsionslosem Material in das rohrförmige Element (4);
zweite Schweißmittel (7) zum Querschweißen des rohrförmigen Elements (4), sodass eine durchgehende und sich abwechselnde Abfolge (8) von Schweißzonen (8a) und Zonen (8b), die eine Dosis von kohäsionslosem Material enthalten, geformt wird;
Schneidemittel (9) zum Querschneiden der durchgehenden Abfolge (8) an den Schweißzonen (8a), sodass Beutel (1) für kohäsionsloses Material geformt werden, die jeweils eine Dosis von kohäsionslosem Material enthalten, und aufweisend eine erste Querschweißnaht (1a) und eine zweite Querschweißnaht (1b),
wobei die Maschine (100) **dadurch gekennzeichnet ist, dass** sie Folgendes umfasst:
Sensormittel (10), die stromabwärts der Schneidemittel (9) angeordnet sind, um die Länge (L1) der ersten Schweißnaht (1a) und/oder die Länge (L2) der zweiten Schweißnaht (1b) der Beutel (1) für kohäsionsloses Material zu erkennen;
eine Steuereinheit (11), die mit den Sensormitteln (10) verbunden ist, um die von den Sensormitteln (10) erkannten Daten zu empfangen und mit einem Bereich vorgegebener Längenwerte der ersten Schweißnaht (1a) und/oder der zweiten Schweißnaht (1b) zu vergleichen.

2. Maschine (100) nach Anspruch 1, wobei die Steuereinheit (11) mit den Schneidemitteln (9) verbunden ist, um die Schneidemittel (9) zu steuern, sodass der Schnitt in der Mitte einer jeden Schweißzone (8a) der durchgehenden Abfolge (8) durchgeführt wird.

3. Maschine (100) nach Anspruch 1 oder 2, wobei die Sensormittel (10) eine Kamera umfassen.

4. Maschine (100) nach einem der vorhergehenden Ansprüche 1 bis 3, umfassend Aussonderungsmittel, die stromabwärts der Sensormittel (10) angeordnet sind, um einen Beutel (1) für kohäsionsloses Material auszusondern, wobei die Steuereinheit (11) die Aussonderungsmittel auf der Grundlage der von den Sensormitteln (10) empfangenen Daten steuert, sodass ein Beutel (1) für kohäsionsloses Material ausgesondert wird, wenn die Länge (L1) der ersten Schweißnaht (1a) und/oder die Länge (L2) der zweiten Schweißnaht (1b) nicht im Bereich vorgegebener Längenwerte der ersten Schweißnaht (1a) und/oder der zweiten Schweißnaht (1b) enthalten sind.

5. Maschine (100) nach einem der vorhergehenden Ansprüche 1 bis 4, umfassend Alarmmittel (12), um eine Störung bei der Herstellung von Beuteln (1) für kohäsionsloses Material zu melden, wobei die Steuereinheit (11) die Alarmmittel (12) auf der Grundlage der von den Sensormitteln (10) empfangenen Daten steuert, sodass gemeldet wird, wenn mindestens ein Beutel (1) für kohäsionsloses Material eine Länge (L1) der ersten Schweißnaht (1a) und/oder eine Länge (L2) der zweiten Schweißnaht (1b) aufweist, die nicht im Bereich vorgegebener Längenwerte der ersten Schweißnaht (1a) und/oder der zweiten Schweißnaht (1b) enthalten ist.

6. Maschine (100) nach einem der vorhergehenden Ansprüche 1 bis 5, umfassend mindestens einen Sensor, vorzugsweise vom optischen Typ, der zwischen den zweiten Schweißmitteln (7) und den Schneidemitteln (9) angeordnet ist, um Folgendes zu erkennen: das Vorhandensein einer Dosis von kohäsionslosem Material an einer jeden Zone (8b), die eine Dosis von kohäsionslosem Material enthält, und/oder die Qualität der durch die zweiten Schweißmittel (7) durchgeführten Schweißung und/oder das Vorhandensein von kohäsionslosem Material an den Schweißzonen (8a).

7. System zur Herstellung und Verpackung von Beuteln (1) für kohäsionsloses Material, umfassend:
eine erste Maschine (100) zum Herstellen von Beuteln (1) für kohäsionsloses Material nach einem der Ansprüche 1 bis 6;
eine zweite Maschine zum Verpacken von Beuteln (1) für kohäsionsloses Material, wobei die zweite Maschine stromabwärts der ersten Maschine (100) angeordnet ist und Folgendes umfasst: Zuführungsmittel zum Zuführen einer Vielzahl von Verpackungen, die dazu bestimmt sind, die Beutel (1) für kohäsionsloses Material zu enthalten, eine Übergabestation, in der eine Vielzahl von Beuteln (1) für kohäsionsloses Material in einer Verpackung platziert wird.

8. System nach Anspruch 7, wobei die zweite Maschine Aussonderungsmittel umfasst, die stromabwärts der Übergabestation angeordnet sind, um eine Verpackung auszusondern, die eine Vielzahl von Beuteln (1) für kohäsionsloses Material enthält, und die Steuereinheit (11) der ersten Maschine (100) die Aussonderungsmittel der zweiten Maschine auf der Grundlage der von den Sensormitteln (10) empfangenen Daten steuert, sodass eine Verpackung, die einen Beutel (1) für kohäsionsloses Material enthält, die eine Länge (L1) der ersten Schweißnaht (1a) und/oder eine Länge (L2) der zweiten Schweißnaht (1b) aufweist, die nicht im Bereich vorgegebener Längenwerte der ersten Schweißnaht (1a) und/oder der zweiten Schweißnaht (1b) enthalten sind, ausgesondert wird.

9. Verfahren zur Herstellung von Beuteln (1) für kohäsionsloses Material, insbesondere für die Tabakindustrie, umfassend die folgenden Schritte:
Fördern eines Bands aus Einwickelmaterial entlang eines Verpackungswegs;
Wickeln des Bands aus Einwickelmaterial, sodass ein rohrförmiges Element (4) geformt wird;
Längsschweißen des aus dem Band aus Einwickelmaterial geformten rohrförmigen Elements (4);
Zuführen von Dosierungen von kohäsionslosem Material in das rohrförmige Element (4);
Querschweißen des rohrförmigen Elements (4), sodass eine durchgehende und sich abwechselnde Abfolge (8) von Schweißzonen (8a) und Zonen (8b), die eine Dosis von kohäsionslosem Material enthalten, geformt wird;
Schneiden der durchgehenden Abfolge (8) quer an den Schweißzonen (8a), sodass Beutel (1) für kohäsionsloses Material geformt werden, die jeweils eine Dosis von kohäsionslosem Material enthalten, und aufweisend eine erste Querschweißnaht (1a) und eine zweite Querschweißnaht (1b),
wobei das Verfahren **dadurch gekennzeichnet ist, dass** es die folgenden Schritte umfasst:
Erkennen der Länge (L1) der ersten Schweißnaht (1a) und/oder der Länge (L2) der zweiten Schweißnaht (1b) des Beutels (1) für kohäsionsloses Material;
Vergleichen der erkannten Länge der ersten Schweißnaht (1a) und/oder der zweiten Schweißnaht (1b) mit einem Bereich vorgegebener Längenwerte der ersten Schweißnaht (1a) und/oder der zweiten Schweißnaht (1b).

10. Verfahren nach Anspruch 9, wobei der Schritt zum Schneiden der durchgehenden Abfolge (8) quer an den Schweißzonen (8a) durchgeführt wird, um eine jede Schweißzone (8a) der durchgehenden Abfolge (8) in der Mitte zu schneiden.

11. Verfahren nach Anspruch 9 oder 10, zudem umfassend den Schritt zum Aussondern eines Beutels (1) für kohäsionsloses Material, wenn die Länge (L1) der ersten Schweißnaht (1a) und/oder die Länge (L2) der zweiten Schweißnaht (1b) nicht im Bereich vorgegebener Längenwerte der ersten Schweißnaht (1a) und/oder der zweiten Schweißnaht (1b) enthalten sind.

12. Verfahren nach einem der Ansprüche 9 bis 11, umfassend den Schritt zum Melden, wenn mindestens ein Beutel (1) für kohäsionsloses Material eine Länge (L1) der ersten Schweißnaht (1a) und/oder eine Länge (L2) der zweiten Schweißnaht (1b) aufweist, die nicht im Bereich vorgegebener Längenwerte der ersten Schweißnaht (1a) und/oder der zweiten Schweißnaht (1b) enthalten sind.

## Revendications

1. Machine (100) pour la fabrication de sachets (1) de matière sans cohésion, en particulier pour l'industrie du tabac, comprenant :
des moyens de transport (2) pour transporter une bande de matériau à envelopper le long d'un parcours d'emballage ;
un poste à envelopper (3) disposé le long du parcours d'emballage, dans laquelle la bande de matériau à envelopper est enroulée pour former un élément tubulaire (4) ;
des premiers moyens de soudage (5) pour souder longitudinalement l'élément tubulaire (4) formé à partir de la bande de matériau à envelopper ;
des moyens d'alimentation (6) de matière sans cohésion pour alimenter des doses de matière sans cohésion à l'intérieur de l'élément tubulaire (4) ;
des deuxièmes moyens de soudage (7) pour souder transversalement l'élément tubulaire (4) de manière à former une succession continue et alternée (8) de zones de soudage (8a) et de zones (8b) contenant une dose de matière sans cohésion ;
des moyens de coupe (9) pour couper transversalement la succession continue (8) en correspondance des zones de soudage (8a) de manière à former des sachets (1) de matière sans cohésion contenant chacun une dose de matière sans cohésion et comportant une première soudure transversale (1a) et une deuxième soudure transversale (1b) ;
la machine (100) étant **caractérisée en ce qu'**elle comprend :
des moyens de détection (10) disposés en aval des moyens de coupe (9) pour détecter la longueur (L1) de la première soudure (1a) et/ou la longueur (L2) de la deuxième soudure (1b) des sachets (1) de matière sans cohésion ;
une unité de commande (11) qui est reliée aux moyens de détection (10) pour recevoir les données détectées par les moyens de détection (10) et les comparer à une plage de valeurs de longueur prédéterminées de la première soudure (1a) et/ou de la deuxième soudure (1b).

2. Machine (100) selon la revendication 1, dans laquelle l'unité de commande (11) est reliée aux moyens de coupe (9) pour commander les moyens de coupe (9) de sorte que la coupe soit effectuée au milieu de chaque zone de soudage (8a) de la succession continue (8).

3. Machine (100) selon la revendication 1 ou 2, dans laquelle les moyens de détection (10) comprennent une caméra.

4. Machine (100) selon l'une quelconque des revendications précédentes de 1 à 3, comprenant des moyens de rejet disposés en aval des moyens de détection (10) pour rejeter un sachet (1) de matière sans cohésion ; et dans laquelle l'unité de commande (11) commande les moyens de rejet sur la base des données reçues des moyens de détection (10) de manière à rejeter un sachet (1) de matière sans cohésion si la longueur (L1) de la première soudure (1a) et/ou la longueur (L2) de la deuxième soudure (1b) n'est pas comprise dans la plage de valeurs de longueur prédéterminées de la première soudure (1a) et/ou de la deuxième soudure (1b).

5. Machine (100) selon l'une quelconque des revendications précédentes de 1 à 4, comprenant des moyens d'alarme (12) pour signaler une irrégularité dans la production de sachets (1) de matière sans cohésion ; et dans laquelle l'unité de commande (11) commande les moyens d'alarme (12) sur la base des données reçues à partir des moyens de détection (10) de manière à signaler si au moins un sachet (1) de matière sans cohésion a une longueur (L1) de la première soudure (1a) et/ou une longueur (L2) de la deuxième soudure (1b) non comprise(s) dans la plage de valeurs de longueur prédéterminées de la première soudure (1a) et/ou de la deuxième soudure (1b) .

6. Machine (100) selon l'une quelconque des revendications précédentes de 1 à 5, comprenant au moins un capteur, de préférence de type optique, disposé entre les deuxièmes moyens de soudage (7) et les moyens de coupe (9) pour détecter : la présence d'une dose de matière sans cohésion en correspondance de chaque zone (8b) contenant une dose de matière sans cohésion ; et/ou la qualité du soudage effectué par les deuxièmes moyens de soudage (7) ; et/ou la présence de matière sans cohésion en correspondance des zones de soudage (8a).

7. Système pour la production et l'emballage de sachets (1) de matière sans cohésion, comprenant :
une première machine (100) pour la fabrication de sachets (1) de matière sans cohésion selon l'une quelconque des revendications 1 à 6 ;
une deuxième machine d'emballage de sachets (1) de matière sans cohésion, la deuxième machine étant disposée en aval de la première machine (100) et comprenant : des moyens d'alimentation pour alimenter une pluralité d'emballages destinés à contenir les sachets (1) de matière sans cohésion ; un poste de distribution dans lequel une pluralité de sachets (1) de matière sans cohésion est placée à l'intérieur d'un emballage.

8. Système selon la revendication 7, dans lequel la deuxième machine comprend des moyens de rejet disposés en aval du poste de distribution pour rejeter un emballage contenant une pluralité de sachets (1) de matière sans cohésion ; et l'unité de commande (11) de la première machine (100) commande les moyens de rejet de la deuxième machine sur la base des données reçues des moyens de détection (10) de manière à rejeter un emballage contenant un sachet (1) de matière sans cohésion dont la longueur (L1) de la première soudure (1a) et/ou la longueur (L2) de la deuxième soudure (1b) n'est pas comprise dans la plage de valeurs de longueur prédéterminées de la première soudure (1a) et/ou de la deuxième soudure (1b).

9. Méthode de fabrication de sachets (1) de matière sans cohésion, en particulier pour l'industrie du tabac, comprenant les étapes de :
transporter une bande de matériau à envelopper le long d'un parcours d'emballage ;
envelopper la bande de matériau à envelopper de manière à former un élément tubulaire (4) ;
souder longitudinalement l'élément tubulaire (4) formé à partir de la bande de matériau à envelopper ;
alimenter des doses de matière sans cohésion à l'intérieur de l'élément tubulaire (4) ;
souder transversalement l'élément tubulaire (4) de manière à former une succession continue et alternée (8) de zones de soudage (8a) et de zones (8b) contenant une dose de matière sans cohésion ;
couper transversalement la succession continue (8) en correspondance des zones de soudage (8a) de manière à former des sachets (1) de matière sans cohésion contenant chacun une dose de matière sans cohésion et comportant une première soudure transversale (1a) et une deuxième soudure transversale (1b) ;
la méthode étant **caractérisée en ce qu'**elle comprend les étapes de :
détecter la longueur (L1) de la première soudure (1a) et/ou la longueur (L2) de la deuxième soudure (1b) du sachet (1) de matière sans cohésion ;
comparer la longueur détectée de la première soudure (1a) et/ou de la deuxième soudure (1b) à une plage de valeurs de longueur prédéterminées de la première soudure (1a) et/ou de la deuxième soudure (1b).

10. Méthode selon la revendication 9, dans laquelle l'étape consistant à couper la succession continue (8) transversalement aux zones de soudage (8a) est effectuée de manière à couper chaque zone de soudage (8a) de la succession continue (8) en son milieu.

11. Méthode selon la revendication 9 ou 10, comprenant de plus l'étape consistant à rejeter un sachet (1) de matière sans cohésion si la longueur (L1) de la première soudure (1a) et/ou la longueur (L2) de la deuxième soudure (1b) n'est pas comprise dans la plage de valeurs de longueur prédéterminées de la première soudure (1a) et/ou de la deuxième soudure (1b).

12. Méthode selon l'une quelconque des revendications de 9 à 11, comprenant l'étape consistant à signaler si au moins un sachet (1) de matière sans cohésion a une longueur (L1) de la première soudure (1a) et/ou une longueur (L2) de la deuxième soudure (1b) non comprise(s) dans la plage de valeurs de longueur prédéterminées de la première soudure (1a) et/ou de la deuxième soudure (1b) .
